# EUROPEAN PATENT SPECIFICATION

(11) **EP 2 710 258 B1**
(45) Date of publication and mention of the grant of the patent: **24.08.2016**
(21) Application number: 12743240.9
(22) Date of filing: 06.07.2012
(51) Int. Cl.: F04B 9/02, F04B 9/04, F04B 53/00, F03D 9/00

(54) **POWER GENERATING APPARATUS AND A METHOD OF OPERATING A PUMP/MOTOR OF A POWER GENERATING APPARATUS**
GENERATOR UND VERFAHREN ZUM BETRIEB EINER PUMPE / EINES MOTORS EINES ENERGIEERZEUGUNGSVORRICHTUNG
GÉNÉRATEUR DE PUISSANCE ET PROCÉDÉ DE FONCTIONNEMENT D'UNE POMPE / MOTEUR D'UN APPAREIL DE PRODUCTION D'ÉNERGIE

(43) Date of publication of application: 26.03.2014
(73) Proprietor: MITSUBISHI HEAVY INDUSTRIES, LTD., Tokyo 108-8215 (JP)
(72) Inventor: LAVENDER, Jack, Midlothian, Lothian, EH209TB (GB); DUMNOV, Daniil, Midlothian, Lothian, EH209TB (GB); STEIN, Uwe, Midlothian, Lothian, EH209TB (GB); MACPHERSON, Jill, Midlothian, Lothian, EH209TB (GB)
(74) Representative: Hindle, Alistair Andrew
(86) International application number: PCT/JP2012/004399
(87) International publication number: WO 2014/006663

(56) References cited:
- WO-A2-2011/104544
- DE-A1-102007 045 844
- US-A1- 2008 060 513
- US-A1- 2011 074 208
- US-A1- 2012 063 929

## Description

### Technical Field

The invention relates to a power generating apparatus comprising a pump and/or a motor and a method of operating a pump and/or motor of a power generating apparatus.

### Background Art

It is known from EP 0 361 927 (Salter and Rampen) to operate a hydraulic pump in which each cylinder has an electronically controlled low pressure valve arranged to regulate the flow of working fluid from low pressure manifold into the respective cylinder and to control the electronically controlled valve on each cycle of cylinder volume to determine whether the cylinder undergoes a pumping cycle with a net displacement of working fluid, or an idle cycle with no net displacement of working fluid. EP 0 494 236 (Salter and Rampen) discloses an improvement in which the valve between each cylinder and the high pressure manifold (the high pressure valves) are also electronically controlled on each cycle of cylinder volume to enable each cylinder to undergo a motoring cycle with a net displacement of working fluid. EP 1 537 333 (Stein et al.) introduced the possibility of part strokes enabling each cylinder to displace either part or all of its maximum stroke volume, in either pumping or motoring mode, on each cycle of working chamber volume. Typically, when partial displacement cycles are employed, they are mixed in with full displacement cycles to allow more precise control of displacement. Examples of machines of this type are Digital Displacement brand hydraulic pumps and motors (Digital Displacement is a trade mark of Artemis Intelligent Power Limited of Loanhead, UK).

Hydraulic machines of this type have the advantage that as the displacement during each cycle of cylinder volume can be selected, they can provide an infinitely variable range of output or input displacement, averaged over a sufficiently long period of time. They can also respond quickly to changes in displacement demand as in a typical application there will be only a very short delay before the next decision point as to the displacement which an individual cylinder should make. Thus, a typical control algorithm selects the volume to be displaced by each cylinder so that the total displacement best matches a demand signal (which might be a desired displacement, or a related variable linked to displacement, such as high pressure manifold pressure). Therefore, a decision is made independently for each volume cycle of each cylinder as to whether or not to carry out an active cycle (in which there is a net displacement of working fluid, whether a full stroke cycle in which the maximum amount of working fluid is displaced or a partial stroke cycle in which only a part of this amount is displaced) or an inactive cycle (in which there is no net displacement of working fluid, perhaps because the low pressure valve is held open so that received working fluid is output back to the low pressure manifold or because all of the valves are held closed so that there is no net displacement of working fluid, simply cavitation in the small residual volume of working fluid within the cylinder). Accordingly, there is no correlation between the cylinders that are selected. Each cylinder is equally likely to be selected, depending on the displacement signal and net output.

This arrangement has several advantages. Each cylinder and its associated valves typically suffers equal wear; and the advantages of infinitely variable range of displacement and rapid response to changes in demand are maximised.

The invention seeks to improve the long term reliability of machines of this type, particularly large machines, for use in applications such as renewable energy generation, particularly where maintenance can be difficult, such as in offshore wind turbines. In such applications, reliability, lifetime and time between maintenance visits are important.

Typically, hydraulic machines of this type drive, or are driven by, one or more cams disposed on a rotating crankshaft supported by a plurality of bearings. In order to maximise reliability, it is advantageous to minimise the bearing side load caused by the net radial forces acting on the crankshaft, and therefore on the bearings which support the cranksltaft, due to unequal radial forces being applied to the cam(s) by the action of pistons. The forces exerted on the cams (and thus the load reacted by the bearings) vary depending on which cylinders are selected at any given time and on the displacements selected for those cylinders during each cycle of cylinder volume. In the case of a hydraulic machine controlled according to the algorithm as specified above, bearing side load can be significant. Bearing side load can be particularly high at some displacement levels which lead to forces being exerted predominantly by pistons located adjacent or substantially adjacent each other and therefore exerting forces which sum to a high resultant force.

Thus the invention addresses the technical problem of reducing bearing side load in a hydraulic machine having a rotating shaft with at least two eccentric cams.

WO 2011/104544 discloses a variable displacement radial fluid working machine.

US 2008/0060513 A1 relates to fluid pumps capable of maintaining a constant horsepower output even as the pressure at which they operate fluctuates.

### Summary of Invention

A first aspect of the invention provides a power generating apparatus of a renewable energy type which generates power from a renewable energy source, the power generating apparatus comprising: a hub on which at least one rotor blade is mounted, the rotor blade receiving energy from the renewable energy source, causing the hub to rotate; a rotating shaft which is connected to the hub; a pump which is secured to the rotating shaft and which is driven by rotation of the rotating shaft; at least one motor which is driven by pressurized hydraulic fluid from the pump; and at least one generator coupled to at least one said motor, wherein the pump and/or at least one motor comprises: a rotatable shaft supported by a plurality of bearings; at least one pair of cams comprising first and second cams disposed circumferentially around the shaft; a plurality of piston cylinder devices distributed circumferentially around each cam, each piston cylinder device comprising a piston operable to reciprocate within a cylinder; at least one pair of piston cylinder devices comprising first and second piston cylinder devices, the pistons of the first and second piston cylinder devices being in force communication with the first and second cams respectively; and a controller in communication with the piston cylinder devices, wherein the first piston cylinder device is positioned substantially opposite the second piston cylinder device, and characterised in that the first and second cams are eccentric cams , in that the controller has an operating mode in which the first and second piston cylinder devices are activated and deactivated substantially in phase with each other such that, when the first and second piston cylinder devices are activated, radial loads exerted on the bearings by the pistons of the first and second piston cylinder devices via the first and second cams respectively have a cancelling effect on each other, in that the second eccentric cam is up to 180°+/- 180° /(nJ) out of phase with the first eccentric cam, where 'n' is the number of piston cylinder devices provided per eccentric cam, and 'J' is the number of pairs of eccentric cams, and in that the phase difference between the first and second cams is offset away from perfect antiphase.

When two components are in "force communication" with each other, forces can be transmitted between them.

Typically, the first and second eccentric cams rotate together with the rotatable shaft. By substantially opposite each other, we mean opposite each other in a radial sense with respect to the rotating shaft. The piston cylinder devices of the or each pair of piston cylinder devices are typically axially displaced from each other. By axially displaced, we mean spaced from each other in a direction parallel to a rotational axis of the rotatable shaft.

Typically, the first and second eccentric cams of the or each pair are axially displaced from each other.

When activated, a cylinder makes a net displacement of pressurized hydraulic fluid during each cycle of working chamber, thereby exerting a force on the respective cam.

When deactivated, a cylinder makes substantially no net displacement of pressurized fluid during each cycle of working chamber, thereby exerting substantially no force on the respective cam.

By activating and deactivating the first and second piston cylinder devices substantially in phase with each other, it can be ensured that the radial loads exerted by the pistons on the bearings via the first and second cams will always have a cancelling effect on each other when the controller is operating in said operating mode. The cancelling effect may be a complete cancelling effect, leading to substantially zero net bearing load being caused by radial forces exerted by the pistons of the first and second piston cylinder devices on the first and second eccentric cams. However, more typically, the cancelling effect will be incomplete and some (albeit reduced) bearing load will remain.

By reducing the bearing load (relative, for example, to activating a single piston cylinder devices at once), firstly the expected lifetime of the bearings can be significantly improved, and secondly the bearings can be made smaller, allowing them to incur lower energy losses under load.

Due to the cancelling effect the radial loads have on each other, the maximum possible bending moment exerted on the shaft may also be reduced in some circumstances, thus increasing the expected lifetime of the shaft. This also reduces the amount of maintenance which needs to be performed on the power generating apparatus, which is particularly beneficial if the power generating apparatus is of a type that is inherently difficult to access, such as an offshore wind turbine.

Preferably, a plurality of pairs of eccentric cams is provided, each pair of eccentric cams comprising first and second eccentric cams disposed circumferentially around the shaft, the first and second eccentric cams being substantially in antiphase with each other.

Typically, the pairs of eccentric cams are axially displaced from each other.

Preferably, a plurality of pairs of piston cylinder devices are provided, each pair of piston cylinder devices comprising first and second piston cylinder devices which are disposed circumferentially around the shaft substantially opposite each other.

Typically, each piston cylinder device disposed circumferentially around the shaft forms a pair of piston cylinder devices together with another piston cylinder device disposed circumferentially around the shaft substantially opposite said each piston cylinder device.

Typically a plurality of piston cylinder devices is distributed circumferentially around each eccentric cam.

Typically a first number of piston cylinder devices is distributed circumferentially around the first eccentric cam and a second number of piston cylinder devices is distributed circumferentially around the second eccentric cam, the first and second number being equal.

Preferably an even number of piston cylinder devices is provided per eccentric cam.

Typically, each piston cylinder device provided around a first cam is paired with a piston cylinder device provided around a second cam adjacent the first cam to form a pair of piston cylinder devices, each pair comprising first and second piston cylinder devices positioned substantially opposite each other.

The controller may be configured to activate and deactivate the piston cylinder devices of each pair of piston cylinder devices together.

Forces may be exerted on the first and second eccentric cams by the pistons of each pair of piston cylinder devices such that radial loads exerted by the pistons of each pair on one or more of the bearings (via the cams) have a cancelling effect on each other.

The first and second eccentric cams are not perfectly in antiphase.

The first and second piston cylinder devices need not be perfectly opposite each other.

The first and second eccentric cams are slightly out of antiphase with each other in order to reduce torque ripple. To the same effect it may be beneficial for the first and second piston cylinder devices of the each pair to be offset from being perfectly opposite each other.

By torque ripple we refer to the variations in torque which arise from the quantised output displacement of machines of this type. The torque in question may be the torque acting on the crankshaft of the pump/motor or on another machine which is coupled to the pump/motor, for example, the torque acting on the blades of a wind turbine coupled to a hydraulic pump through a drive shaft, or the rotating shaft of an electric generator coupled to a hydraulic motor.

In this case, torque ripple is reduced because the first and second piston cylinder devices of the or each pair of piston cylinder devices drive (or are driven by) the first and second cams at slightly different times, levelling out the torque peak which would otherwise be caused by the cams driving (or being driven by) two piston cylinder devices at precisely the same time.

In one embodiment, a phase difference of 180° +%- 22.5°, 180° +/- 12.5°, or 180° +/-7.5° may be provided between the first and second cams, the phase difference being measured circumferentially around a rotational axis of the rotatable shaft.

The second eccentric cam (of the or each pair of eccentric cams) is 180° +/- 180° /(nJ) out of phase with the first eccentric cam (of said the or each pair), where 'n' is the number of piston cylinder devices provided per eccentric cam, and 'J' is the number of pairs of eccentric cams. Phase is typically measured circumferentially around the shaft.

It has been found that by providing this phase difference between the first and second eccentric cams, torque ripple can be reduced while obtaining a significant reduction in bearing loads.

Alternatively, the first piston cylinder device of the or each pair of piston cylinder devices may be 180°+/- 180°/(nJ) out of phase with the second piston cylinder device of that pair. In this case, the first and second cams of the or each pair may be perfectly in antiphase with each other and torque ripple will still be reduced.

In the operating mode in which the first and second piston cylinder devices are activated and deactivated substantially in phase with each other, the first and second piston cylinder devices need not be activated and deactivated perfectly in phase with each other. However, it will be appreciated that the closer together in phase the activation/deactivation is, the greater the reduction in bearing load (i.e. through greater cancellation in the radial forces exerted by the pistons on the bearing(s) via the cams).

The communication between the controller and the first and second piston cylinder devices is typically electronic communication.

Typically, each of the at least one generators is coupled to a respective one of the at least one said motors.

In one embodiment, the power generating apparatus comprises at least two motors and at least two generators, each generator being coupled to at least one said motor. Preferably, each of the at least two generators is coupled to a respective one of the at least two said motors.

The pistons may be in force communication with the respective eccentric cams for only part of each revolution of the shaft. Alternatively, the pistons may be in constant force communication with the respective eccentric cams. For example, the pistons may be coupled to the respective cams by connecting rods.

In one embodiment, the first eccentric cam is coupled to the piston of the first piston cylinder device by a first connecting rod and the second eccentric cam is coupled to the piston of the second piston cylinder device by a second connecting rod, wherein each connecting rod has a sliding surface which runs on the eccentric cam to which it is coupled.

Connecting rods provide convenient and efficient means for coupling the eccentric cams to the pistons of the piston cylinder groups.

Preferably, at least first and second bearings support the shaft at respective first and second positions, the first and second eccentric cams being provided at an intermediate position on the shaft between the first and second positions. The first and second positions are thus axially displaced from each other, and from the first and second eccentric cams, along the shaft. The bearings typically engage the shaft at the first and second positions.

The first and second eccentric cams (of each pair) are typically axially adjacent to each other. There are typically no additional cams between the first and second eccentric cams but one or more additional bearings may be provided axially between them, for example to support the shaft between the first and second eccentric cams.

Typically, where a plurality of pairs of cams is provided, each pair of cams has at least one cam which is axially adjacent a cam of another axially adjacent pair of cams (i.e. with no additional cams provided between them) and a shared bearing is provided between them. Preferably, as well as the cams of each pair of cams being substantially in antiphase with each other, the axially adjacent cams of adjacent pairs of cams are also substantially in antiphase with each other. This helps to minimise the load exerted on the bearings shared between the axially adjacent pairs of cams. This is because radial loads exerted on the shared bearing(s) by pistons of piston cylinder devices provided around the axially adjacent cams of adjacent pairs of cams (via said cams) have a cancelling effect on each other.

Preferably, there are 'J' pairs of eccentric cams disposed along the shaft and 'n' piston cylinder devices disposed circumferentially around each eccentric cam, the relative phase angle of the first eccentric cam of the j^{th} pair being defined as (360°/n) multiplied by (j-1)/J, the relative phase angles being measured circumferentially around a rotational axis of the rotatable shaft. In this case, the piston cylinder devices distributed around each pair of cams may be provided at the same relative phases.

By "relative phase", we mean the phase relative to an arbitrary zero point defined by the phase of the first eccentric cam of a 1^{st} pair of eccentric cams.

As indicated above, each pair of cams typically comprises first and second cams which are axially displaced from each other. The first cam of each pair is therefore axially closer to a first end of the shaft than the second cam of each pair. Thus, by the "first" eccentric cam of each pair, we mean the cam of each pair which is axially closer to the first end of the shaft than the second cam of that pair. It will be understood that the "first end" of the shaft may be either end of the shaft as long as it is defined consistently to provide a fixed reference.

When at least three pairs of cams are provided, the j^{th} pair of eccentric cams need not be provided between the (j-1)^{th} and (j+1)^{th} pairs of eccentric cams. However, preferably, the j^{th} pair of cams is indeed positioned between the (j-1)^{th} pair of cams and the (j+1)^{th} pair of cams. In this case, the phase difference between the first cam of the (j-1)^{th} pair of cams and the first cam of the j^{th} pair of cams is less than the phase difference between the first cam of the (j-1)^{th} pair of cams and the first cam of the (j+1) ^{th} pair of cams. This ensures that the relative phases of adjacent pairs of cams are as close together as possible, which helps to reduce the load exerted on any intermediate bearings provided between the adjacent pairs of cams.

By phasing the first eccentric cams of each pair of eccentric cams in accordance with this formula, it has been found that torque ripple is substantially reduced, particularly when a plurality of pairs of eccentric cams is provided along the shaft (and a corresponding plurality of piston cylinder devices is provided around each cam). As above, this is because each pair of cams drives (or is driven by) the piston cylinder devices provided around it at different times during rotation of the rotating shaft, thus substantially levelling out the torque peaks that would otherwise be generated if the cams drove (or were driven by) their respective piston cylinder devices simultaneously.

Preferably, particularly where piston cylinder devices are distributed around each pair of cams at the same relative phases, no eccentric cams have the same phase angle. By providing each eccentric cam with a different phase angle, torque ripple can be minimised.

Alternatively, the piston cylinder devices distributed around each pair of eccentric cams may be offset in phase from the piston cylinder devices distributed around an adjacent pair of eccentric cams. For example, the relative angle of the first piston cylinder device provided around the first eccentric cam of the j^{th} pair of eccentric cams may be (360°/n) multiplied by (j-1)/J, the parameters being defined as above. Preferably the piston cylinder devices distributed around each pair of eccentric cams are distributed at different phases around their respective pair of cams than those distributed around any other pair of eccentric cams disposed on the shaft. In this case, the first eccentric cams of each pair of cams may be provided at the same relative phase and the second eccentric cams of each pair of cams may be provided at the same relative phase.

Where the first cams of adjacent pairs of eccentric cams are provided at the same phase and the second cams of adjacent pairs of eccentric cams are provided at the same phase, preferably no piston cylinder devices are positioned at the same phase angle circumferentially around the shaft.

In one embodiment, the first and second eccentric cams of each pair of cams are axially displaced from each other by a first distance and adjacent bearings are axially displaced from each other by a second distance, the first distance being less than the second distance. Because the first distance is less than the second distance, radial forces exerted by the pistons of the first and second piston cylinder devices on the first and second eccentric cams cause a lower bending moment to be exerted on the shaft.

Preferably, for 'm' pairs of eccentric cams, 'm'+1 bearings are provided to support the shaft. For multiple pairs of eccentric cams, as indicated above, an intermediate bearing may be shared between adjacent pairs of eccentric cams. It is preferable to have one more bearing than there are pairs of cams because a particularly stable arrangement is provided with one bearing on either side of each pair of cams (in an axial sense) and one bearing in between each adjacent pair of cams (again in an axial sense).

First and second shaft seals may be provided, each shaft seal being disposed at respective opposite ends of the shaft. Alternatively a single shaft seal disposed at one end of the shaft may be provided (i.e. without the second shaft seal disposed at the opposite end).

The first and second eccentric cams are typically single lobed cams.

The first piston cylinder device may have a principle reciprocating axis which lies on a first plane, the second piston cylinder device having a principle reciprocating axis which lies on a second plane, wherein the first and second planes are axially displaced from each other along the shaft.

Typically, the power generating apparatus is a wind turbine generator which generates the power from wind as the renewable energy.

A second aspect of the invention provides a method of operating a pump and/or motor of a power generating apparatus comprising: a hub on which at least one rotor blade is mounted, wherein the rotor blade receives energy from the renewable energy source, causing the hub to rotate; a rotating shaft which is connected to the hub; a pump which is secured to the rotating shaft and which is driven by rotation of the rotating shaft; at least one motor which is driven by pressurized hydraulic fluid from the pump; and at least one generator coupled to at least one said motor, the method comprising:
a. supporting a rotatable shaft by a plurality of bearings;
b. characterised by operating first and second piston cylinder devices in an operating mode in which the first and second piston cylinder devices are activated and deactivated substantially in phase with each other, each piston cylinder device comprising a piston operable to reciprocate in a cylinder, the first and second piston cylinder devices forming a pair of piston cylinder devices which are distributed circumferentially around the rotatable shaft substantially opposite each other;
c. activating the first and second piston cylinder devices substantially in phase with each other; and
d. exerting radial loads on one or more of the bearings by the pistons of the first and second piston cylinder devices via respective first and second eccentric cams,
wherein the second eccentric cam is up to 180°+/- 180° /(nJ) out of phase with the first eccentric cam, where 'n' is the number of piston cylinder devices provided per eccentric cam, and 'J' is the number of pairs of eccentric cams such that the radial loads exerted by the pistons on the bearings via the respective first and second cams have a cancelling effect on each other, wherein a plurality of piston cylinder devices are distributed circumferentially around each eccentric cam and in that the phase difference between the first and second eccentric cams is offset away from perfect antiphase.

By activating and deactivating the first and second piston cylinder devices substantially in phase with each other, it can be ensured that the radial loads exerted by the pistons on the bearings via the cams will always have a cancelling effect on each other when the controller is operating in said operating mode.

By reducing the net bearing load (relative, for example, to activating a single piston cylinder devices at once), the expected lifetime of the bearings can be significantly improved.

Typically, each of the at least one generators is coupled to a respective one of the at least one said motors.

In one embodiment, the power generating apparatus comprises at least two motors and at least two generators, each generator being coupled to at least one said motor. Preferably, each of the at least two generators is coupled to a respective one of the at least two said motors.

Preferably, the method further comprises: activating a plurality of pairs of piston cylinder devices disposed circumferentially around the shaft, the piston cylinder devices of each pair of piston cylinder devices being positioned substantially opposite each other and being activated and deactivated substantially in phase with each other; and exerting radial loads on one or more bearings by the pistons of each pair of piston cylinder devices via the first and second cams respectively such that the radial loads exerted by the pistons on the one or more bearings have a cancelling effect on each other.

The pairs of piston cylinder devices are typically offset in phase with respect to each other around the shaft.

The first and second eccentric cams are typically single-lobed cams.

Preferably the power generating apparatus is a wind turbine generator which generates power from wind as the renewable energy.

### Brief Description of Drawings

An example embodiment of the present invention will now be illustrated with reference to the following Figures in which:
[fig.1]Figure 1 is a schematic diagram of a wind turbine according to the present invention;
[fig.2]Figure 2 is a schematic sectional view of a rotatable shaft of a pump or motor of the wind turbine of Figure 1;
[fig.3]Figure 3 is a schematic diagram of a hydraulic pump or motor of the wind turbine of Figure 1;
[fig.4]Figure 4 is an end view of the rotatable shaft of Figure 2; and
[fig.5]Figure 5 is a simplified side view of the shaft of Figure 2.

### Description of Embodiments

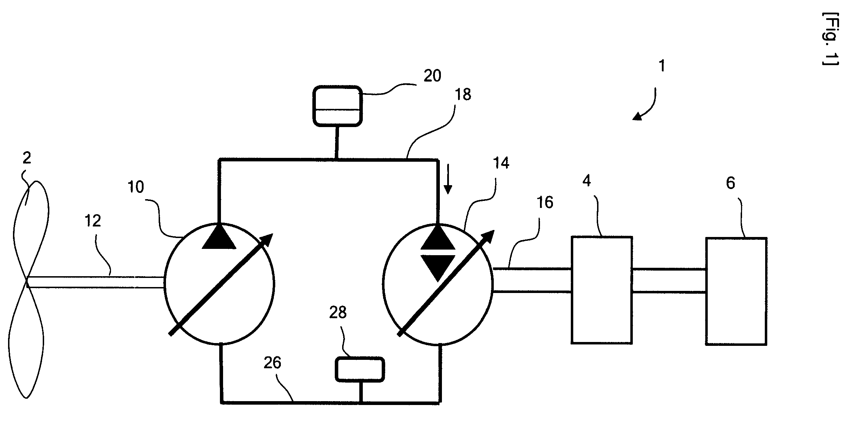

Figure 1 schematically illustrates a wind turbine 1 comprising a variable-pitch turbine 2 and a synchronous electrical generator 4. The electrical generator 4 is connected to a 3-phase grid 6 (typically operating at 50 Hz or 60 Hz). Wind energy from the turbine 2 is transmitted to the electrical generator 4 through a hydraulic transmission. The hydraulic transmission includes a variable-displacement hydraulic pump 10 drivably connected to the turbine by a driveshaft 12, and a variable-displacement hydraulic motor 14 connected to the rotor of the electrical generator by a further drive shaft 16. Further details of the variable-displacement hydraulic pump 10 and motor 14 are discussed below.

A pressurised fluid manifold 18 (functioning as the high-pressure transmission manifold) extends from the outlet of the hydraulic pump to the inlet of the hydraulic motor. In some embodiments, it extends to the inlet of a plurality of hydraulic motors, connected in parallel, each of which may independently drive a separate generator. The pressurised fluid manifold 18 is also in communication with an oleopneumatic accumulator 20, which functions as a reservoir for working fluid. The oleopneumatic accumulator is precharged with a relatively high pressure of inert gas, usually at least 100 bar, and further pressurised inert gas may also be held in gas bottles fluidically connected thereto. The pump 10 and motor 14 are also coupled to a low pressure manifold 26 via respective low pressure valves (not shown). The low pressure manifold also extends to a reservoir tank or low pressure accumulator 28 for hydraulic working fluid and functions in use to direct working fluid from the outlet of the hydraulic motor(s) to the inlet of the hydraulic pump.

### (Hydraulic Pump and Motor: Principles of Operation)

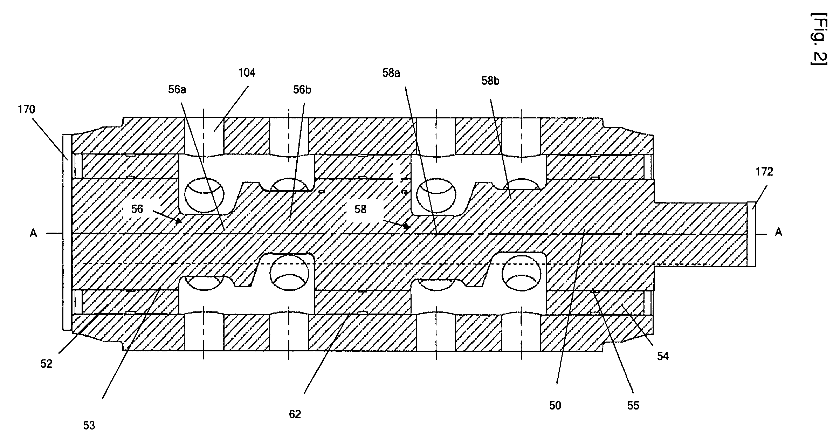

Figure 2 is a schematic sectional view of a rotatable crankshaft 50 of the pump 10 or motor 14, which is supported by first and second bearings 52, 54 at respective first and second positions 53, 55. Two pairs of single-lobed eccentric cams (or "throws") 56, 58, each comprising first and second single-lobed eccentric cams 56a and 56b, 58a and 58b respectively, are provided axially spaced from each other along the crankshaft 50. The first and second cams of each pair of cams 56, 58 are substantially in antiphase with each other around the shaft.

The two pairs of cams 56, 58 are provided at intermediate positions on the shaft 50 between the first and second positions 53, 55. An additional bearing 62 may be provided between the cams 56, 58. Generally, if 'm' pairs of first and second eccentric cams are provided, (m+1) bearings may be provided (the pairs of cams being provided between two bearings, with one additional bearing being provided between each adjacent pair of cams). As shown in Figure 2, bearings may be shared between adjacent pairs of cams. This provides a stable, durable arrangement, while minimising the number of bearings.

As shown in Figures 2, 4 and 5, respective banks of piston cylinder devices (although only the cylinders of the piston cylinder devices are shown in Figure 2) are typically provided around each cam 56a, 56b, 58a and 58b, each bank comprising a plurality of piston cylinder devices distributed circumferentially around the shaft 50. The eccentric cams rotate with the shaft 50. During a rotation of the rotatable shaft 50 about rotational axis "A" (see Figure 2), each eccentric cam is in constant force communication with the respective pistons of the bank of piston cylinder devices surrounding that cam. Each pair of cams thus typically drives (or, in the case of a motor 14, is thus typically driven by) a different pair of adjacent banks of piston cylinder devices.

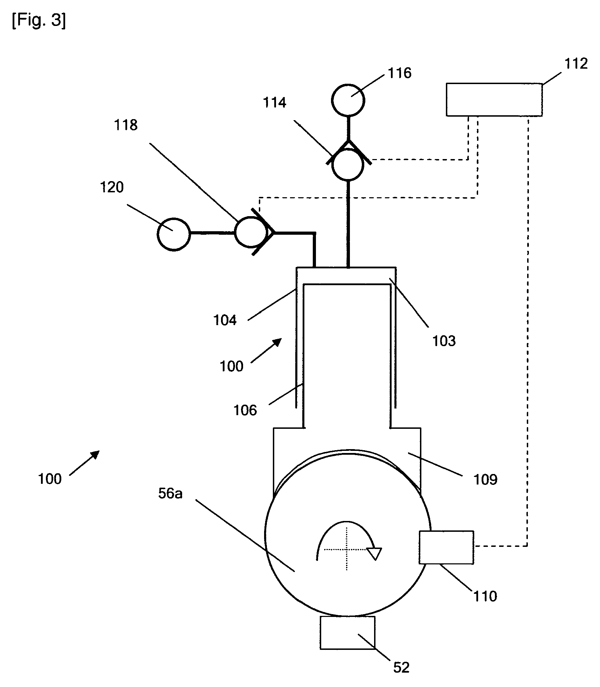

Each piston cylinder device comprises a piston reciprocating within a cylinder along a principle reciprocating axis substantially perpendicular to a rotational axis (indicated by line A-A in Figure 2) of the shaft to define a working chamber of cyclically varying volume. The volume of fluid displaced by each piston cylinder device can be selected on each cycle of working chamber volume. The net throughput of fluid through the working chamber is determined by the active control of electronically controllable valves, in phased relationship to cycles of working chamber volume, to regulate fluid communication between individual working chambers of the machine and fluid manifolds. Individual chambers are selectable by a machine controller 112 (which is in electronic communication with the piston cylinder devices - see Figure 3) on a cycle by cycle basis, to either displace a selectable volume of fluid or to undergo an idle cycle with no net displacement of fluid, thereby enabling the net throughput of the pump or motor, as appropriate, to be matched dynamically to a demand.

As shown most clearly in Figure 2, the piston cylinder devices of each bank typically lie on the same plane (that is, the principle reciprocating axes of the piston cylinder devices of each bank lie on a common, typically vertical, plane). As explained below, each piston cylinder device is paired with a piston cylinder device of an adjacent bank (adjacent banks being axially displaced from each other) to form a pair of piston cylinder devices, the piston cylinder devices of each pair being substantially opposite each other. However, firstly, the principles of operation of the pump 10 and motor 14 are described.

Figure 3 is a schematic diagram of the pump 10 and/or motor 14 showing only one eccentric cam 56a and a single piston cylinder device 100. However, it will be understood that the other cams and piston cylinder devices of the pump 10 and/or motor 14 operate according to the same principles.

The piston cylinder device 100 illustrated in Figure 3 comprises a working chamber 103 having a volume defined by the interior surface of a cylinder 104 and a piston 106 which reciprocates within the cylinder 104 to cyclically vary the volume of the working chamber. The piston 106 is driven by (or, when the machine is operating as a motor, drives) the eccentric cam 56a. The piston 106 comprises a shaped foot 109 which is shaped to engage cam 56a such that forces can be transmitted between the piston 106 and the cam 56a via piston foot 109.

A shaft position and speed sensor 110 determines the instantaneous angular position and speed of rotation of the shaft, and transmits shaft position and speed signals to the machine controller 112, which enables the controller 112 to determine the instantaneous phase of the cycles of each individual working chamber. The machine controller 112 typically comprises a processor, such as a microcontroller, which executes a stored program in use.

The piston cylinder device 100 further comprises an actively controlled low pressure valve 114 in the form of an electronically controllable face-sealing poppet valve, which faces inwards toward the working chamber and is operable to selectively seal off a channel extending from the working chamber 103 to a low pressure manifold 116, which is in communication with the main low pressure manifold 26 through an inlet or outlet of the hydraulic pump 10 or motor 14 respectively. The working chamber 103 further comprises a high pressure valve 118. The high pressure valve faces outwards from the working chamber and is operable to seal off a channel extending from the working chamber to a high pressure manifold 120 which is in communication with the pressurised fluid manifold 18 through an outlet or inlet of the fluid pump or motor respectively.

At least the low pressure valve 114 is actively controlled so that the controller 112 can select whether the low pressure valve 114 is actively closed, or in some embodiments, actively held open, during each cycle of working chamber volume. In some embodiments, the high pressure valve 118 is actively controlled and in some embodiments, the high pressure valve 118 is a passively controlled valve, for example, a pressure delivery check valve.

The hydraulic pump 10 and hydraulic motor 14 may carry out only pumping or motoring cycles respectively. However, either or both devices may be a pump-motor which can operate as a pump or a motor in alternative operating modes and can thereby carry out pumping or motoring cycles.

A full stroke pumping cycle, such as is carried out by the hydraulic pump in use, is described in EP 0 361 927. During an expansion stoke of a working chamber, the low pressure valve 114 is open and hydraulic fluid is received from the low pressure manifold 116. At or around bottom dead centre, the controller 112 determines whether or not the low pressure valve 114 should be closed. If the low pressure valve 114 is closed, working fluid within the working chamber 103 is pressurized by the movement of the piston 106 (which is driven by the crankshaft 50 via piston foot 109) into the cylinder 104 and vented to the high pressure valve 118 during the subsequent contraction phase of working chamber volume, so that a pumping cycle occurs and a volume of fluid is displaced to the high pressure manifold. Radial reaction forces exerted by the piston 106 during a pumping stroke are transmitted to the crankshaft 50 via the eccentric cam 56a, exerting a load on one or more of the bearings which support the shaft.

The low pressure valve 114 then opens again at or shortly after top dead centre. If the low pressure valve remains open, working fluid within the working chamber is vented back to the low pressure manifold 116 and an idle cycle occurs, in which there is no net displacement of fluid to the high pressure manifold 120.

In some embodiments, the low pressure valve 114 will be biased open and will need to be actively closed by the controller if a pumping cycle is selected. In other embodiments, the low pressure valve 114 will be biased closed and will need to be actively held open by the controller 112 if an idle cycle is selected. The high pressure valve 118 may be actively controlled, or may be a passively opening check valve.

A full stroke motoring cycle, such as is carried out by the hydraulic motor 14, is described in EP 0 494 236. During a contraction stroke, fluid is vented to the low pressure manifold 116 through the low pressure valve 114. An idle cycle can be selected by the controller 112 in which case the low pressure valve 114 remains open. However, if a full stroke motoring cycle is selected, the low pressure valve 114 is closed near the end of the exhaust stroke (i.e. shortly before top dead centre), causing pressure to build up within the working chamber as it continues to reduce in volume. Once sufficient pressure has been built up, the high pressure valve 118 can be opened, typically just after top dead centre, and fluid flows into the working chamber 103 from the high pressure manifold 120. This high pressure fluid drives the piston 106 out of the cylinder 104 causing the crankshaft 50 to be rotated via the eccentric cam 56a. As well as driving the crankshaft 50, the radial force exerted by the piston 106 on the cam 56a exerts a load on one or more of the bearings which support the shaft.

Shortly before bottom dead centre, the high pressure valve 118 is actively closed, whereupon pressure within the working chamber falls, enabling the low pressure valve 114 to open around or shortly after bottom dead centre.

In some embodiments, the low pressure valve 114 will be biased open and will need to be actively closed by the controller 112 if a motoring cycle is selected. In other embodiments, the low pressure valve 114 will be biased closed and will need to be actively held open by the controller 112 if an idle cycle is selected. The low pressure valve 114 typically opens passively, but it may open under active control to enable the timing of opening to be carefully controlled. Thus, the low pressure valve 114 may be actively opened, or, if it has been actively held open this active holding open may be stopped. The high pressure valve 118 may be actively or passively opened. Typically, the high pressure valve 118 will be actively opened.

In some embodiments, instead of selecting only between idle cycles and full stroke pumping and/or motoring cycles, the machine controller 112 is also operable to vary the precise phasing of valve timings to create partial stroke pumping and/or partial stroke motoring cycles.

In a partial stroke pumping cycle, the low pressure valve 114 is closed later in the exhaust stroke so that only a part of the maximum stroke volume of the working chamber 103 is displaced into the high pressure manifold 120. Typically, closure of the low pressure valve 114 is delayed until just before top dead centre.

In a partial stroke motoring cycle, the high pressure valve 118 is closed and the low pressure valve 114 opened part way through the expansion stroke so that the volume of fluid received from the high pressure manifold 120 and thus the net displacement of fluid is less than would otherwise be possible.

It may be that the controller 112 of the hydraulic pump 10 and/or the controller 112 of the hydraulic motor 14 are remote from the hydraulic pump 10 and the hydraulic motor 14. For example, a centralised system controller could carry out the functions of the controller 112 of the hydraulic pump and/or the controller 112 of the hydraulic motor and generate valve control signals to control the opening or closing of individual valves. However, typically, the hydraulic pump 10 and the hydraulic motor 14 have separate controllers 112.

### (Reducing bearing loads)

The pairs of cams 56, 58, and the banks of piston cylinder devices that surround each cam, are substantially similar. Accordingly, for brevity, unless otherwise stated, only the first pair 56 of cams 56a, 56b and the banks of piston cylinder devices that surround them are considered in detail below. It will be understood that the other pairs of cams 58 and the banks of piston cylinder devices that surround it are substantially similar to pair 56 and its corresponding piston cylinder banks, unless otherwise stated.

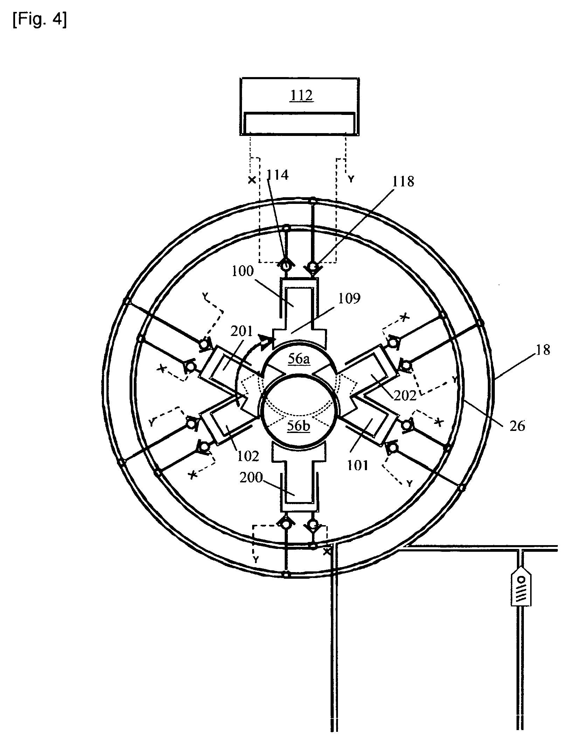

As most clearly shown in Figure 4, three piston cylinder devices 100-102 are distributed circumferentially around the first eccentric cam 56a, and three piston cylinder devices 200-202 are distributed circumferentially around the second eccentric cam 56b. Piston cylinder devices 100 and 200, 101 and 201, and 102 and 202 form first, second and third pairs of piston cylinder devices which are substantially opposite each other.

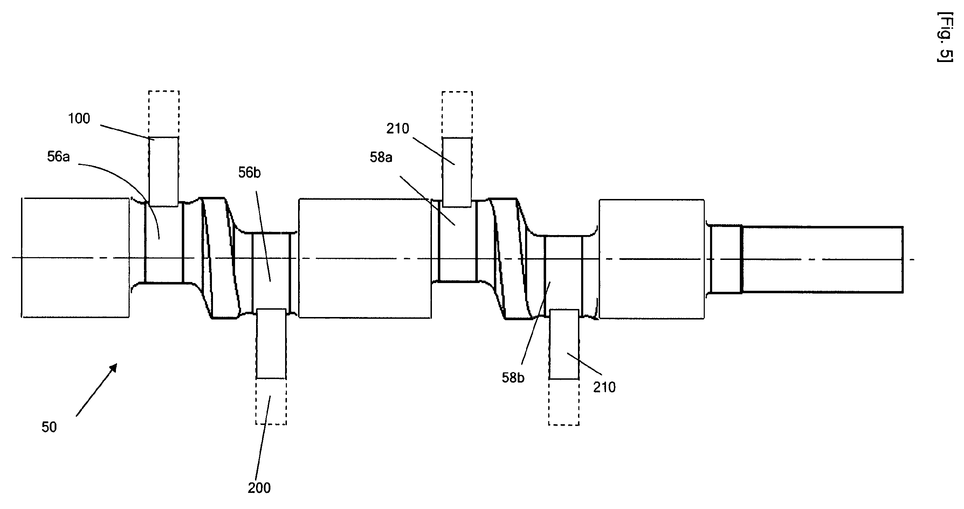

Whether the hydraulic machine is operating as a pump 10 or a motor 14, the machine controller 112 has an operating mode in which the two piston cylinder devices of each pair of piston cylinder devices are activated and deactivated substantially in phase with each other (i.e. substantially simultaneously). Thus, when the first eccentric cam 56a drives (or is driven by) the first piston cylinder device 100, the second eccentric cam 56b drives (or is driven by) the second piston cylinder device 200. Because the piston cylinder 100, 200 and the cams 56a, 56b are substantially opposite each other, the radial loads exerted by the pistons of the first and second piston cylinder devices 100, 200 on the bearings via the first and second eccentric cams 56a, 56b have a cancelling effect on each other. This is shown most clearly in Figure 5. Similar interactions (including cancelling of radial bearing loads) occur between eccentric cams 56a, 56b and the other pairs of piston cylinder devices 101, 201 and 102, 202.

The first and second cams 56a, 56b are provided axially adjacent each other because the more closely spaced the cams of each pair are axially, the lower the bending moment exerted on the shaft 50. Typically, the cams of each pair are more closely spaced than adjacent bearings. That is, first and second eccentric cams within a pair of cams may be axially displaced from each other along the shaft by a first distance and adjacent bearings may be axially displaced from each other along the shaft by a second distance, the first distance being less than the second distance.

If the first and second piston cylinder devices 100, 200 are not perfectly opposite each other, or the first and second eccentric cams 56a, 56b are not perfectly in antiphase or where the first and second piston cylinder devices 100, 200 are each configured in an operating mode to displace different volumes of fluid, the radial forces may not perfectly cancel, resulting in a residual bearing load. Preferably, but not necessarily, in this operating mode, the two piston cylinder devices of each pair of piston cylinder devices may each be configured to provide substantially the same displacement of fluid to optimise the cancellation of the radial forces exerted by the pistons on the first and second cams, thus optimising the reduction in bearing load.

Because the radial bearing loads have a cancelling effect on each other, less load is reacted by the bearings and the expected lifetime of the bearings increases significantly. Increasing the expected lifetime of the bearings is of particular value in applications, such as offshore wind turbines, where the hydraulic machines can be difficult to access for maintenance purposes (and it is therefore desired to keep maintenance to a minimum).

If the piston cylinder devices 100, 200 are perfectly opposite each other, and the first and second eccentric cams 56a, 56b are perfectly in antiphase (assuming that the eccentric cams are symmetric), the radial bearing loads exerted by the pistons of those devices via the eccentric cams 56a, 56b may cancel with each other completely, leading to a zero net radial bearing load exerted by that pair of piston cylinder devices 100, 200 (assuming that each piston cylinder device of the pair is configured to displace the same amount of fluid).

However, when the piston cylinder devices 100, 200 are perfectly opposite each other, and the first and second eccentric cams 56a, 56b, are perfectly in antiphase with each other, a significant torque ripple may be observed. This torque ripple can be reduced by offsetting the phase difference between the first and second cams 56a, 56b away from perfect antiphase. The greater the offset from perfect antiphase, the less torque ripple is observed. However, as explained above, the closer to antiphase the greater the reduction in bearing load. Accordingly, it is necessary to reconcile these competing requirements.

It has been found that, if 'J' pairs of eccentric cams are provided, and 'n' piston cylinder devices are provided in each bank, that a phase difference of 180° +/- (180° / nJ) between the first and second eccentric cams 56a, 56b provides an optimum reduction in bearing load and torque ripple.

For example, for 3 pairs of first and second eccentric cams 56, 58 ('J' = 3), assuming three piston cylinder devices are provided around each cam ('n' = 3), a phase difference of (180° +/- (180°/(3*3)) =) 180° +/- 20° may be provided.

It will be understood that, rather than offsetting the cams of each pair from antiphase, alternatively, the piston cylinder devices of each pair of piston cylinder devices may be offset from being perfectly opposite each other. For example, the second piston cylinder device of each pair may be offset from the first piston cylinder device of that pair by an angle of 180° +/- (180° /nJ) as measured circumferentially around the shaft. 'n' and 'J' are defined as above.

As illustrated in Figure 5, adjacent pairs of cams (and the banks of piston cylinder devices that surround them) may be aligned with each other. That is, when the first set of cams 56a, 56b drive an opposing pair of piston cylinder devices 100, 200, the second pair of cams 58a, 58b simultaneously drives another opposing pair of piston cylinder devices 210, 212 (see Figure 5) which have principle reciprocating axes which are substantially parallel to the respective principle reciprocating axes of the piston cylinder devices 100, 200 driven by cams 56a, 56b. In this case, the respective pairs of piston cylinder devices of each bank are driven substantially in phase with each other by a respective pair of cams. As a result, a significant torque ripple may still be observed due to the direct superposition of the residual torque ripple produced by the interaction of each pair of cams 56, 58 with a corresponding pair 100, 200 and 210, 212 of piston cylinder devices (i.e. due to the sum of the torque ripple produced by the interaction of each pair of cams with a corresponding pair of piston cylinder devices, despite the offset from perfect antiphase between the cams of each pair). This torque ripple can be reduced by offsetting the phases of adjacent pairs of cams relative to each other (assuming that the piston cylinder devices of each bank are dispersed around the shaft at the same relative positions). More specifically, it has been found that, for 'J' pairs of cams and 'n' piston cylinder devices provided in each bank, the relative phase angle of the first eccentric cam of the j^{th} pair should be (360°/n)*(j-1)/J.

For example for 3 pairs of cams ('J' = 3), and 3 piston cylinder devices provided around each cam ('n' = 3), the relative phases of the first cams of the three pairs of cams with respect to each other will be ((360°/3)*((1-1)/3)=)0°, ((360°/3)*((2-1)/3)=) 40° and ((360°/3)*((3-1)/3)=) 80°.

By offsetting the relative phases of each pair of cams from each other, the overall torque ripple is substantially reduced because some torques will cancel each other out rather than sum constructively with each other and/or because fewer (in some embodiments preferably none of the) pairs of piston cylinder devices are driven simultaneously. Preferably, none of the eccentric cams of the hydraulic pump 10 and/or motor 14 are provided with the same relative phase angle to minimise torque ripple.

As shown in Figure 5, a cam 56b of the first pair of cams 56 is axially adjacent a cam 58a of the second pair of cams 58 (with no additional cams provided between them). These axially adjacent cams 56b, 58a of the first and second pairs 56, 58 are substantially in antiphase with each other. This helps to minimise the load exerted on the bearing 62 shared between the (axially adjacent) first and second pairs of cams 56, 58 because radial loads exerted on the shared bearing 62 by the pistons of the piston cylinder devices surrounding those cams (e.g. the pistons of piston cylinder devices 200, 210) via said cams 56b, 58a have a cancelling effect on each other.

Using the terminology provided above, where more than two pairs of cams are provided, the first, second, third etc pairs of first and second eccentric cams as defined by the above formula need not be consecutively adjacent. For example, a third pair of eccentric cams may be provided axially between first and second pairs of cams such that the first cam of the third pair is offset from the first cam of the first pair by 80°, while the first cam of the second pair is offset from the first cam of the first pair by 40° (the offset angles being calculated as above, assuming that three piston cylinder devices are provided in each bank). However, it is preferable that the first, second, third etc pairs of first and second eccentric cams as defined by the above formula are indeed consecutively adjacent because this ensures that the relative phases of adjacent pairs of cams are as close together as possible, thus minimising the load exerted on the bearings, and in particular on bearings shared between adjacent pairs of cams. In the given example, the second pair of eccentric cams is thus preferably provided between the first and third pairs of eccentric cams, the first cams of the first, second and third pairs of cams having respective relative phases 0°, 40° and 80° (again assuming that each bank comprises three piston cylinder devices dispersed around the shaft).

Again, rather than offsetting the phases of adjacent pairs of cams relative to each other, the pairs of piston cylinder devices distributed circumferentially around each pair of cams may alternatively be offset in position from the piston cylinder devices distributed around the other pairs of cams. For example, for 'J' pairs of cams and 'n' piston cylinder devices provided in each bank, the relative phase angle of the first piston cylinder device provided around the first cam of the j^{th} pair of cams should be (360°/n)*(j-1)/J. Typically, the piston cylinder devices are evenly distributed around the shaft.

As shown in Figure 2, a pair of shaft seals 170, 172 is provided, one seal at each opposite end of the shaft 150 to retain lubricant in a case in which the crankshaft 50 is housed. However, only a single shaft seal may be provided.

It will be understood that, rather than coupling the piston cylinder devices to the cams via piston feet 109, the piston cylinder devices may be coupled to the cams via connecting rods. In this case, the first eccentric cam of each pair of cams may be coupled to a piston of a first piston cylinder device by a first connecting rod and the second eccentric cam of that pair may be coupled to the piston of a second piston cylinder device by a second connecting rod. Each connecting rod may be provided with a (typically annular) sliding surface which runs on the eccentric cam to which it is coupled.

Further modifications and variations may be made within the scope of the invention herein disclosed.

### Reference Signs List

1 Wind turbine
2 Variable-pitch turbine
4 Electrical Generator
6 3-phaese grid
10 Hydraulic pump
12 Driveshaft
14 Hydraulic Motor
18 Pressurised fluid manifold
20 Oleopneumatic accumulator
26 Low pressure manifold
28 Low pressure accumulator
50 Rotatable crankshaft
52 Bearing
54 Bearing
53 First position
55 Second position
56 Set of cams
56a Eccentric cam
56b Eccentric cam
58 Set of cams
58a Eccentric cam
58b Eccentric cam
62 Bearing
100 Piston Cylinder Device
101 Piston Cylinder Device
102 Piston Cylinder Device
103 Working Chamber
104 Cylinder
106 Piston
109 Piston foot
110 Shaft position and speed sensor
112 Machine Controller
114 Low pressure valve
116 Low pressure manifold
118 High pressure valve
120 High pressure manifold
170 Shaft Seal
172 Shaft Seal
200 Piston cylinder device
201 Piston cylinder device
202 Piston cylinder device
210 Piston cylinder device
212 Piston cylinder device

## Claims

1. A power generating apparatus of a renewable energy type which generates power from a renewable energy source, the power generating apparatus comprising:
a hub on which at least one rotor blade is mounted, the rotor blade receiving energy from the renewable energy source, causing the hub to rotate; a rotating shaft (12) which is connected to the hub; a pump (10) which is secured to the rotating shaft (12) and which is driven by rotation of the rotating shaft (12); at least one motor (14) which is driven by pressurized hydraulic fluid from the pump (10); and at least one generator (4) coupled to at least one said motor (14), wherein the pump (10) and/or at least one motor (14) comprises:
a rotatable shaft (50) supported by a plurality of bearings (52, 54); at least one pair of cams (56) comprising first (56a) and second (56b) cams disposed circumferentially around the shaft; a plurality of piston cylinder devices distributed circumferentially around each cam, each piston cylinder device comprising a piston (106) operable to reciprocate within a cylinder (104); at least one pair of piston cylinder devices comprising first (100) and second (200) piston cylinder devices, the pistons of the first (100) and second (200) piston cylinder devices being in force communication with the first (56a) and second (56b) cams respectively; and a controller (112) in communication with the piston cylinder devices,
wherein the first piston cylinder device (100) is positioned substantially opposite the second piston cylinder device (200), and **characterised in that** the first and second cams are eccentric cams, **in that** the controller (112) has an operating mode in which the first (100) and second (200) piston cylinder devices are activated and deactivated substantially in phase with each other such that, when the first (100) and second (200) piston cylinder devices are activated, radial loads exerted on the bearings by the pistons of the first (100) and second (200) piston cylinder devices via the first (56a) and second (56b) eccentric cams respectively have a cancelling effect on each other,
**in that** the second eccentric cam (56b) is up to 180°+/- 180° /(nJ) out of phase with the first eccentric cam (56a), where 'n' is the number of piston cylinder devices provided per eccentric cam, and 'J' is the number of pairs of eccentric cams,
and **in that** the phase difference between the first (56a) and second (56b) eccentric cams is offset away from perfect antiphase.

2. A power generating apparatus of a renewable energy type according to claim 1, wherein the first eccentric cam (56a) is coupled to the piston of the first piston cylinder device (100) by a first connecting rod and the second eccentric cam (56b) is coupled to the piston of the second piston cylinder device (200) by a second connecting rod, wherein each connecting rod has a sliding surface which runs on the eccentric cam to which it is coupled.

3. A power generating apparatus of a renewable energy type according to claim 1, wherein there are at least first (52) and second (54) bearings which support the shaft at respective first (53) and second (55) positions, the first (56a) and second (56b) eccentric cams being provided at an intermediate position on the shaft between the first and second positions.

4. A power generating apparatus of a renewable energy type according to claim 1 comprising 'J' pairs of first (56a) and second (56b) eccentric cams axially displaced from each other along the shaft (50), each pair (56) of eccentric cams comprising first (56a) and second (56b) eccentric cams disposed circumferentially around the shaft (50), 'J' being an integer greater than one, and 'n' piston cylinder devices disposed circumferentially around each eccentric cam, wherein the relative phase angle of the first eccentric cam of the j^{th} pair is defined as (360°/n) multiplied by (j-1)/J, the relative phase angles being measured circumferentially around a rotational axis of the rotatable shaft.

5. A power generating apparatus of a renewable energy type according to claim 1, wherein the first (56a) and second (56b) eccentric cams are axially displaced from each other by a first distance and adjacent bearings are axially displaced from each other by a second distance, the first distance being less than the second distance.

6. A power generating apparatus of a renewable energy type according to claim 1, wherein for 'm' pairs of eccentric cams, 'm'+1 bearings are provided to support the shaft (50).

7. A power generating apparatus of a renewable energy type according to claim 1, further comprising a shaft seal (170 or 172) disposed at an end of the shaft (50).

8. A power generating apparatus of a renewable energy type according to claim 1, wherein no eccentric cams have the same phase angle.

9. A power generating apparatus of renewable energy type according to claim 1 wherein each piston cylinder device (100) disposed circumferentially around the shaft (50) forms a pair of piston cylinder devices together with another piston cylinder device (200) disposed circumferentially around the shaft substantially opposite said each piston cylinder device.

10. A power generating apparatus of renewable energy type according to claim 1 wherein an even number of piston cylinder devices is provided per eccentric cam.

11. A power generating apparatus of renewable energy type according to claim 1, wherein the power generating apparatus is a wind turbine generator which generates the power from wind as the renewable energy.

12. A method of operating a pump and/or motor of a power generating apparatus comprising: a hub on which at least one rotor blade is mounted, wherein the rotor blade receives energy from the renewable energy source, causing the hub to rotate; a rotating shaft (12) which is connected to the hub; a pump (10) which is secured to the rotating shaft (12) and which is driven by rotation of the rotating shaft (12); at least one motor (14) which is driven by pressurized hydraulic fluid from the pump (10); and at least one generator (4) coupled to at least one said motor (14), the method comprising:
a. supporting a rotatable shaft (50) by a plurality of bearings (52, 54);
b. **characterised by** operating first (100) and second (200) piston cylinder devices in an operating mode in which the first (100) and second (200) piston cylinder devices are activated and deactivated substantially in phase with each other, each piston cylinder device comprising a piston (106) operable to reciprocate in a cylinder (104), the first (100) and second (200) piston cylinder devices forming a pair of piston cylinder devices which are distributed circumferentially around the rotatable shaft (50)substantially opposite each other;
c. activating the first (100) and second (200) piston cylinder devices substantially in phase with each other; and
d. exerting radial loads on one or more of the bearings (52, 54) by the pistons of the first (100) and second (200) piston cylinder devices via respective first (56a) and second (56b) eccentric cams,
wherein the second eccentric cam (56b) is up to 180°+/- 180° /(nJ) out of phase with the first eccentric cam (56a), where 'n' is the number of piston cylinder devices provided per eccentric cam, and 'J' is the number of pairs of eccentric cams such that the radial loads exerted by the pistons on the bearings (52, 54) via the respective first (56a) and second (56b) cams have a cancelling effect on each other, wherein a plurality of piston cylinder devices are distributed circumferentially around each eccentric cam and
in that the phase difference between the first (56a) and second (56b) eccentric cams is offset away from perfect antiphase.

13. A method of operating a pump and/or motor of a power generating apparatus according to claim 12, the method further comprising: activating a plurality of pairs of piston cylinder devices disposed circumferentially around the shaft, the piston cylinder devices (100, 200) of each pair of piston cylinder devices being positioned substantially opposite each other and being activated and deactivated substantially in phase with each other; and exerting radial loads on one or more bearings (52) by the pistons of each pair of piston cylinder devices via the first (56a) and second (56b) cams respectively such that the radial loads exerted on the one or more bearings (52) by the pistons via the respective first (56a) and second (56b) cams have a cancelling effect on each other.

14. A method of operating a pump and/or motor of a power generating apparatus according to claim 12 wherein the power generating apparatus is a wind turbine generator which generates the power from wind as the renewable energy.

## Patentansprüche

1. Vorrichtung zur Stromerzeugung über erneuerbare Energie, die Strom aus einer Quelle erneuerbarer Energie erzeugt, wobei die Vorrichtung zur Stromerzeugung umfasst:
eine Nabe, an der mindestens ein Rotorblatt montiert ist, wobei das Rotorblatt Strom aus der Quelle erneuerbarer Energie erhält, wodurch bewirkt wird, dass sich die Nabe dreht;
eine Drehwelle (12), die mit der Nabe verbunden ist; eine Pumpe (10), die an der Drehwelle (12) befestigt ist und die durch Drehung der Drehwelle (12) angetrieben wird;
mindestens einen Motor (14), der von druckbeaufschlagtem Hydraulikfluid aus der Pumpe (10) angetrieben wird; und
mindestens einen Generator (4), der mit dem mindestens einen Motor (14) gekoppelt ist, wobei die Pumpe (10) und/oder der mindestens eine Motor (14) umfassen:
eine Drehwelle (50), die von einer Vielzahl von Lagern (52, 54) abgestützt wird;
mindestens ein Paar Nocken (56), das erste (56a) und zweite (56b) Nocken umfasst, die in Umfangsrichtung um die Welle angeordnet sind;
eine Vielzahl von Kolbenzylindervorrichtungen, die in Umfangsrichtung um jeden Nocken verteilt sind, wobei jede Kolbenzylindervorrichtung einen Kolben (106) umfasst, der zum Hin- und Hergehen innerhalb eines Zylinders (104) betrieben werden kann;
mindestens ein Paar Kolbenzylindervorrichtungen, das erste (100) und zweite (200) Kolbenzylindervorrichtungen umfasst, wobei die Kolben der ersten (100) und zweiten (200) Kolbenzylindervorrichtung in Kraftverbindung mit dem ersten (56a) bzw. zweiten (56b) Nocken stehen; und
eine Steuerung (112) in Kommunikation mit den Kolbenzylindervorrichtungen, wobei die erste Kolbenzylindervorrichtung (100) im Wesentlichen gegenüber der zweiten Kolbenzylindervorrichtung (200) angeordnet ist, und
**dadurch gekennzeichnet, dass** der erste und zweite Nocken Exzenternocken sind,
dadurch, dass die Steuerung (112) einen Betriebsmodus aufweist, bei dem die erste (100) und zweite (200) Kolbenzylindervorrichtung im Wesentlichen phasengleich aktiviert und deaktiviert werden, sodass, wenn die erste (100) und zweite (200) Kolbenzylindervorrichtung aktiviert werden, radiale Spannungen, die auf die Lager durch die Kolben der ersten (100) und zweiten (200) Kolbenzylindervorrichtung über den ersten (56a) bzw. zweiten (56b) Exzenternocken ausgeübt werden, eine einander aufhebende Wirkung besitzen,
dadurch, dass der zweite Exzenternocken (56b) bis zu 180°+/-180 °/(nJ) phasenverschoben vom ersten Exzenternocken (56a) ist, wobei n die Anzahl der Kolbenzylindervorrichtungen ist, die pro Exzenternocken bereitgestellt wird und J die Anzahl von Exzenternockenpaaren ist, und dadurch, dass der Phasenunterschied zwischen dem ersten (56a) und zweiten (56b) Exzenternocken von der perfekten Antiphase versetzt ist.

2. Vorrichtung zur Stromerzeugung über erneuerbare Energie nach Anspruch 1, wobei der erste Exzenternocken (56a) mit dem Kolben der ersten Kolbenzylindervorrichtung (100) über eine erste Verbindungsstange gekoppelt ist und der zweite Exzenternocken (56b) mit dem Kolben der zweiten Kolbenzylindervorrichtung (200) über eine zweite Verbindungsstange gekoppelt ist, wobei jede Verbindungsstange eine Gleitoberfläche aufweist, die über den Exzenternocken läuft, der damit gekoppelt ist.

3. Vorrichtung zur Stromerzeugung über erneuerbare Energie nach Anspruch 1, wobei mindestens ein erstes (52) und ein zweites (54) Lager vorhanden sind, welche die Welle an der zugehörigen ersten (53) und zweiten (55) Position abstützen, wobei der erste (56a) und der zweite (56b) Exzenternocken an einer Zwischenposition der Welle zwischen der ersten und der zweiten Position angeordnet sind.

4. Vorrichtung zur Stromerzeugung über erneuerbare Energie nach Anspruch 1, umfassend 'J' Paare erster (56a) und zweiter (56b) Exzenternocken, die entlang der Welle (50) axial voneinander versetzt sind, wobei jedes Paar (56) Exzenternocken erste (56a) und zweite (56b) Exzenternocken aufweist, die auf dem Umfang der Welle (50) angeordnet sind, wobei J eine ganze Zahl und größer als 1 ist und n Kolbenzylindervorrichtungen auf dem Umfang um jeden Exzenternocken angeordnet sind, wobei der relative Phasenwinkel des ersten Exzenternocken des j-ten Paares als (360°/n) x (j- 1)/J definiert wird, wobei die relativen Phasenwinkel über einen Umfang einer Drehachse der Drehwelle gemessen werden.

5. Vorrichtung zur Stromerzeugung über erneuerbare Energie nach Anspruch 1, wobei der erste (56a) und der zweite (56b) Exzenternocken mit einem ersten Abstand axial voneinander versetzt sind und benachbarte Lager mit einem zweiten Abstand axial voneinander versetzt sind, wobei der erste Abstand kleiner als der zweite Abstand ist.

6. Vorrichtung zur Stromerzeugung über erneuerbare Energie nach Anspruch 1, wobei für 'm' Paare Exzenternocken, 'm'+1 Lager vorgesehen sind, um die Welle (50) abzustützen.

7. Vorrichtung zur Stromerzeugung über erneuerbare Energie nach Anspruch 1, ferner umfassend eine Wellendichtung (170 oder 172), die an einem Ende der Welle (50) angeordnet ist.

8. Vorrichtung zur Stromerzeugung über erneuerbare Energie nach Anspruch 1, wobei keiner der Exzenternocken den gleichen Phasenwinkel aufweist.

9. Vorrichtung zur Stromerzeugung über erneuerbare Energie nach Anspruch 1, wobei jede Kolbenzylindervorrichtung (100), die auf dem Umfang der Welle (50) angeordnet ist, ein Paar Kolbenzylindervorrichtungen mit einer anderen Kolbenzylindervorrichtung (200) bildet, die auf dem Umfang der Welle im Wesentlichen gegenüber jeder Kolbenzylindervorrichtung angeordnet ist.

10. Vorrichtung zur Stromerzeugung über erneuerbare Energie nach Anspruch 1, wobei eine gerade Anzahl von Kolbenzylindervorrichtungen pro Exzenternocken bereitgestellt wird.

11. Vorrichtung zur Stromerzeugung über erneuerbare Energie nach Anspruch 1,
wobei die Vorrichtung zur Stromerzeugung ein Windturbinengenerator ist, der den Strom aus Wind als erneuerbare Energie erzeugt.

12. Verfahren zum Betreiben einer Pumpe und/oder eines Motors einer Vorrichtung zur Stromerzeugung, umfassend: eine Nabe, an mindestens ein Rotorblatt montiert ist, wobei das Rotorblatt Strom aus der Quelle erneuerbarer Energie erhält, wodurch bewirkt wird, dass sich die Nabe dreht; eine Drehwelle (12), die mit der Nabe verbunden ist; eine Pumpe (10), die an der Drehwelle (12) befestigt ist und die durch Drehung der Drehwelle (12) angetrieben wird; mindestens einen Motor (14), der von druckbeaufschlagtem Hydraulikfluid aus der Pumpe (10) angetrieben wird; und mindestens einen Generator (4), der mit dem mindestens einen Motor (14) gekoppelt ist, wobei das Verfahren umfasst:
a. Abstützen einer Drehwelle (50) über eine Vielzahl von Lagern (52, 54);
b. **gekennzeichnet durch** Betreiben erster (100) und zweiter (200) Kolbenzylindervorrichtungen in einem Betriebsmodus, bei dem die erste (100) und zweite (200) Kolbenzylindervorrichtung im Wesentlichen phasengleich aktiviert und deaktiviert werden, wobei jede Kolbenzylindervorrichtung einen Kolben (106) umfasst, der zum Hin- und Hergehen in einem Zylinder (104) betrieben werden kann, wobei die erste (100) und zweite (200) Kolbenzylindervorrichtung ein Paar Kolbenzylindervorrichtungen bilden, das auf dem Umfang der Drehwelle (50) im Wesentlichen einander gegenüber verteilt ist;
c. im Wesentlichen phasengleiches Aktivieren der ersten (100) und zweiten (200) Kolbenzylindervorrichtung; und
d. Ausüben radialer Spannungen auf eines oder mehrere der Lager (52, 54) über die Kolben der ersten (100) und zweiten (200) Kolbenzylindervorrichtung über zugehörige erste (56a) und zweite (56b) Exzenternocken,
wobei der zweite Exzenternocken (56b) bis zu 180°+/-180°/(nJ) phasenverschoben vom ersten Exzenternocken (56a) ist, wobei 'n' die Anzahl der Kolbenzylindervorrichtungen ist, die pro Exzenternocken vorgesehen ist und 'J' die Anzahl der Paare von Exzenternocken ist, sodass die radialen Spannungen, die von den Kolben auf die Lager (52, 54) über den ersten (56a) und zweiten (56b) Nocken ausgeübt werden, eine einander aufhebende Wirkung besitzen, wobei eine Vielzahl von Kolbenzylindervorrichtungen auf dem Umfang um jeden Exzenternocken verteilt ist und
**dadurch**, dass der Phasenunterschied zwischen dem ersten (56a) und zweiten (56b) Exzenternocken von der perfekten Antiphase versetzt ist.

13. Verfahren zum Betreiben einer Pumpe und/oder eines Motors einer Vorrichtung zur Stromerzeugung nach Anspruch 12, wobei das Verfahren ferner umfasst: Aktivieren einer Vielzahl von Paaren von Kolbenzylindervorrichtungen, die auf dem Umfang der Welle angeordnet sind, wobei die Kolbenzylindervorrichtungen (100, 200) jedes Paares von Kolbenzylindervorrichtungen im Wesentlichen einander gegenüber angeordnet sind und im Wesentlichen phasengleich aktiviert und deaktiviert werden; und Ausüben von radialen Spannungen auf eines oder mehrere Lager (52) über die Kolben jedes Paares von Kolbenzylindervorrichtungen über den ersten (56a) bzw. zweiten (56b) Nocken, sodass die radialen Spannungen, die auf eines oder mehrere Lager (52) über die Kolben über den ersten (56a) und zweiten (56b) Nocken ausgeübt werden, eine einander aufhebende Wirkung besitzen.

14. Verfahren zum Betreiben einer Pumpe und/oder eines Motors einer Vorrichtung zur Stromerzeugung nach Anspruch 12, wobei die Vorrichtung zur Stromerzeugung ein Windturbinengenerator ist, der Strom aus Wind als erneuerbare Energie erzeugt.

## Revendications

1. Appareil de génération d'électricité d'un type à énergie renouvelable qui génère de l'électricité à partir d'une source d'énergie renouvelable, l'appareil de génération d'électricité comportant :
un moyeu sur lequel est montée au moins une pale de rotor, la pale de rotor recevant de l'énergie provenant de la source d'énergie renouvelable, faisant tourner le moyeu ; un arbre tournant (12) qui est relié au moyeu ; une pompe (10) qui est fixée à l'arbre tournant (12) et qui est entraînée par la rotation de l'arbre tournant (12) ; au moins un moteur (14) qui est entraîné par du fluide hydraulique sous pression en provenance de la pompe (10) ; et au moins un générateur (4) couplé à au moins un desdits moteurs (14), la pompe (10) et/ou le ou les moteurs (14) comportant :
un arbre rotatif (50) soutenu par une pluralité de paliers (52, 54) ; au moins une paire de cames (56) comportant des première (56a) et deuxième (56b) cames disposées circonférentiellement autour de l'arbre ; une pluralité de dispositifs piston-cylindre répartis circonférentiellement autour de chaque came, chaque dispositif piston-cylindre comportant un piston (106) apte à aller et venir à l'intérieur d'un cylindre (104) ; au moins une paire de dispositifs piston-cylindre comportant des premier (100) et deuxième (200) dispositifs piston-cylindre, les pistons des premier (100) et deuxième (200) dispositifs piston-cylindre étant respectivement en communication d'effort avec les première (56a) et deuxième (56b) cames ; et un régulateur (112) en communication avec les dispositifs piston-cylindre,
le premier dispositif piston-cylindre (100) étant positionné sensiblement à l'opposé du deuxième dispositif piston-cylindre (200), et **caractérisé en ce que** les première et deuxième cames sont des cames excentriques, **en ce que** le régulateur (112) est doté d'un mode de fonctionnement dans lequel les premier (100) et deuxième (200) dispositifs piston-cylindre sont activés et désactivés sensiblement en phase entre eux de telle façon que, lorsque les premier (100) et
deuxième (200) dispositifs piston-cylindre sont activés, des charges radiales exercées sur les paliers par les pistons des premier (100) et deuxième (200) dispositifs piston-cylindre respectivement via les première (56a) et deuxième (56b) cames excentriques aient un effet d'annulation l'une sur l'autre,
**en ce que** la deuxième came excentrique (56b) présente un déphasage pouvant atteindre 180°+/-180°/(nJ) par rapport à la première came excentrique (56a), 'n' étant le nombre de dispositifs piston-cylindre installés par came excentrique, et 'J' étant le nombre de paires de cames excentriques,
et **en ce que** la différence de phase entre les première (56a) et deuxième (56b) cames excentriques est décalée par rapport à une parfaite opposition de phase.

2. Appareil de génération d'électricité d'un type à énergie renouvelable selon la revendication 1, la première came excentrique (56a) étant couplée au piston du premier dispositif piston-cylindre (100) par une première bielle et la deuxième came excentrique (56b) étant couplée au piston du deuxième dispositif piston-cylindre (200) par une deuxième bielle, chaque bielle présentant une surface de glissement qui chemine sur la came excentrique à laquelle elle est couplée.

3. Appareil de génération d'électricité d'un type à énergie renouvelable selon la revendication 1, où il existe au moins des premier (52) et deuxième (54) paliers qui soutiennent l'arbre à des première (53) et deuxième (55) positions respectives, les première (56a) et deuxième (56b) cames excentriques étant placées dans une position intermédiaire sur l'arbre entre les première et deuxième positions.

4. Appareil de génération d'électricité d'un type à énergie renouvelable selon la revendication 1, comportant 'J' paires de first (56a) et deuxième (56b) cames excentriques espacées axialement l'une par rapport à l'autre le long de l'arbre (50), chaque paire (56) de cames excentriques comportant des première (56a) et deuxième (56b) cames excentriques disposées circonférentiellement autour de l'arbre (50), 'J' étant un entier supérieur à l'unité, et 'n' dispositifs piston-cylindre disposés circonférentiellement autour de chaque came excentrique, l'angle de phase relatif de la première came excentrique de la j^{ème} paire étant défini comme (360°/n) multiplié par (j-1)/J, les angles de phase relatifs étant mesurés circonférentiellement autour d'un axe de rotation de l'arbre rotatif.

5. Appareil de génération d'électricité d'un type à énergie renouvelable selon la revendication 1, les première (56a) et deuxième (56b) cames excentriques étant espacées axialement l'une par rapport à l'autre d'une première distance et des paliers adjacents étant espacés axialement l'un par rapport à l'autre d'une deuxième distance, la première distance étant inférieure à la deuxième distance.

6. Appareil de génération d'électricité d'un type à énergie renouvelable selon la revendication 1, pour 'm' paires de cames excentriques, 'm'+1 paliers étant installés pour soutenir l'arbre (50).

7. Appareil de génération d'électricité d'un type à énergie renouvelable selon la revendication 1, comportant en outre un joint (170 ou 172) d'arbre disposé à une extrémité de l'arbre (50).

8. Appareil de génération d'électricité d'un type à énergie renouvelable selon la revendication 1, aucune des cames excentriques ne présentant le même angle de phase.

9. Appareil de génération d'électricité de type à énergie renouvelable selon la revendication 1, chaque dispositif piston-cylindre (100) disposé circonférentiellement autour de l'arbre (50) formant une paire de dispositifs piston-cylindre conjointement avec un autre dispositif piston-cylindre (200) disposé circonférentiellement autour de l'arbre sensiblement à l'opposé dudit dispositif piston-cylindre considéré.

10. Appareil de génération d'électricité de type à énergie renouvelable selon la revendication 1, un nombre pair de dispositifs piston-cylindre étant installé par came excentrique.

11. Appareil de génération d'électricité de type à énergie renouvelable selon la revendication 1, l'appareil de génération d'électricité étant un générateur d'éolienne qui génère l'électricité à partir du vent en tant qu'énergie renouvelable.

12. Procédé d'exploitation d'une pompe et/ou d'un moteur d'appareil de génération d'électricité comportant : un moyeu sur lequel est montée au moins une pale de rotor, la pale de rotor recevant de l'énergie provenant de la source d'énergie renouvelable, faisant tourner le moyeu ; un arbre tournant (12) qui est relié au moyeu ; une pompe (10) qui est fixée à l'arbre tournant (12) et qui est entraînée par la rotation de l'arbre tournant (12) ; au moins un moteur (14) qui est entraîné par du fluide hydraulique sous pression en provenance de la pompe (10) ; et au moins un générateur (4) couplé à au moins un desdits moteurs (14), le procédé comportant les étapes consistant à :
a. faire soutenir un arbre rotatif (50) par une pluralité de paliers (52, 54) ;
b. **caractérisé par** l'exploitation de premier (100) et deuxième (200) dispositifs piston-cylindre dans un mode de fonctionnement dans lequel les premier (100) et deuxième (200) dispositifs piston-cylindre sont activés et désactivés sensiblement en phase entre eux, chaque dispositif piston-cylindre comportant un piston (106) apte à aller et venir dans un cylindre (104), les premier (100) et deuxième (200) dispositifs piston-cylindre formant une paire de dispositifs piston-cylindre qui sont répartis circonférentiellement autour de l'arbre rotatif (50) sensiblement à l'opposé l'un de l'autre ;
c. activer les premier (100) et deuxième (200) dispositifs piston-cylindre sensiblement en phase entre eux ; et
d. faire exercer des charges radiales sur un ou plusieurs des paliers (52, 54) par les pistons des premier (100) et deuxième (200) dispositifs piston-cylindre via des première (56a) et deuxième (56b) cames excentriques respectives,
la deuxième came excentrique (56b) présentant un déphasage pouvant atteindre 180°+/-180°/(nJ) par rapport à la première came excentrique (56a), 'n' étant le nombre de dispositifs piston-cylindre installés par came excentrique, et 'J' étant le nombre de paires de cames excentriques de telle façon que les charges radiales exercées par les pistons sur les paliers (52, 54) via les première (56a) et deuxième (56b) cames respectives aient un effet d'annulation l'une sur l'autre,
une pluralité de dispositifs piston-cylindre étant répartie circonférentiellement autour de chaque came excentrique et
la différence de phase entre les première (56a) et deuxième (56b) cames excentriques étant décalée par rapport à une parfaite opposition de phase.

13. Procédé d'exploitation d'une pompe et/ou d'un moteur d'appareil de génération d'électricité selon la revendication 12, le procédé comportant en outre les étapes consistant à : activer une pluralité de paires de dispositifs piston-cylindre disposés circonférentiellement autour de l'arbre, les dispositifs piston-cylindre (100, 200) de chaque paire de dispositifs piston-cylindre étant positionnés sensiblement à l'opposé l'un de l'autre et étant activés et désactivés sensiblement en phase entre eux ; et faire exercer des charges radiales sur un ou plusieurs paliers (52) par les pistons de chaque paire de dispositifs piston-cylindre via les première (56a) et deuxième (56b) cames respectivement de telle façon que les charges radiales exercées sur le ou les paliers (52) par les pistons via les première (56a) et deuxième (56b) cames respectives aient un effet d'annulation l'une sur l'autre.

14. Procédé d'exploitation d'une pompe et/ou d'un moteur d'appareil de génération d'électricité selon la revendication 12, l'appareil de génération d'électricité étant un générateur d'éolienne qui génère l'électricité à partir du vent en tant qu'énergie renouvelable.
